# EUROPEAN PATENT SPECIFICATION

(11) **EP 2 580 671 B1**
(45) Date of publication and mention of the grant of the patent: **22.04.2015**
(21) Application number: 10853016.3
(22) Date of filing: 11.06.2010
(51) Int. Cl.: G06F 15/16, G06F 9/06

(54) **HTTP-BASED CLIENT-SERVER COMMUNICATION SYSTEM AND METHOD**
AUF HTTP BASIERTES CLIENT-SERVER-KOMMUNIKATIONSSYSTEM UND VERFAHREN
SYSTÈME ET PROCÉDÉ DE COMMUNICATION CLIENT-SERVEUR BASÉE SUR HTTP

(43) Date of publication of application: 17.04.2013
(73) Proprietor: Hewlett-Packard Development Company, L.P., Houston, TX 77070 (US)
(72) Inventor: GOLDMAN, Jason, D., Ft. Collins, CO 80528-9544 (US)
(74) Representative: Samson & Partner
(86) International application number: PCT/US2010/038352
(87) International publication number: WO 2011/155945

(56) References cited:
- EP-A2- 0 773 503
- US-A1- 2007 159 651
- US-A1- 2008 301 247
- US-A1- 2010 049 721
- US-B1- 6 621 827
- US-B1- 6 907 463

## Description

### BACKGROUND

This section is intended to introduce the reader to various aspects of art, which may be related to various aspects of the present disclosure that are described or claimed below. This discussion is believed to be helpful in providing the reader with background information to facilitate a better understanding of the various aspects of the present disclosure. Accordingly, it should be understood that these statements are to be read in this light, and not as admissions of prior art.

A user may store a variety of files locally on several different computers, but may desire access to these files from each computer. For example, a user may create or store a variety of media files, such as photos, music, and videos on various home computers belonging to the user. These files may be copied onto a home server, such as a server based on Microsoft Windows Home Server (WHS). The home server may allow the user to stream remote copies of the photos, music, and videos from the server to the various home computers.

Manually copying files from individual computers to a server may be tedious. Thus, users may desire that a server perform an automatic collection of certain files without significant user intervention. Techniques have been developed to perform such automatic file collection, but these techniques may have certain limitations. For example, these techniques may limit server-initiated communication for access security purposes and/or may inefficiently copy the same files from multiple clients.

Document US 6907463 published on 14/05/2005 describes a method for exchanging files in a network environment.

### BRIEF DESCRIPTION OF THE DRAWINGS

FIG. 1 is a block diagram of a client-server system, in accordance with an embodiment;
FIG. 2 is a block diagram describing a manner in which files from the client may be stored on the server, in accordance with an embodiment;
FIG. 3 is a flow diagram illustrating a manner of automatic file collection, in accordance with an embodiment;
FIG. 4 is a flowchart describing an embodiment of a method for the client-side of the automatic file collection of FIG. 3; and
FIG. 5 is a flowchart describing an embodiment of a method for the server-side of the automatic file collection of FIG. 3.

### DETAILED DESCRIPTION OF SPECIFIC EMBODIMENTS

One or more embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The methods according to claims 1 and 14 and the system according to claim 11 relate to robust, secure, and efficient HTTP-based client-server communication. Rather than to provide each client direct access to shares of storage on a server and allow each client to save files onto the server shares, each client may transfer files only when requested to do so by the server. In particular, a given client may initiate a long polling Hypertext Transfer Protocol (HTTP) request to the server. The server then may respond to the long polling request with a command to the client when the server is ready. In this way, the server may securely request a specific file from the client without direct access to the client's file system.

Concurrently, the client may collect information regarding available files in local client storage. The client may transmit this collected file information via a file offer over HTTP to an HTTP handler on the server side, which may respond with an HTTP acknowledgement. It is from such file offers that the server may determine what files are stored on the various clients that are not stored on the server. The server then may request those files from the client by sending a filed request command in response to the long polling HTTP request originally sent by the client. By subsequently transferring the file to the server via file transfer protocol (FTP), the client may provide the file without direct access to the server shares.

Since the client initiates all communication with the server, a relatively high level of security for the client may be maintained. Moreover, since the server may decide when to issue a file request to the client in response to the long polling HTTP request as needed, the server may request that the client send certain files only when network bandwidth is available. It should also be noted that the present embodiments may be more efficient because the server may select which client supplies a given file when that file is available on multiple clients. By allowing the server to select a single point of origin for the file, the tendency for multiple clients to copy the same file to the server may be reduced or eliminated.

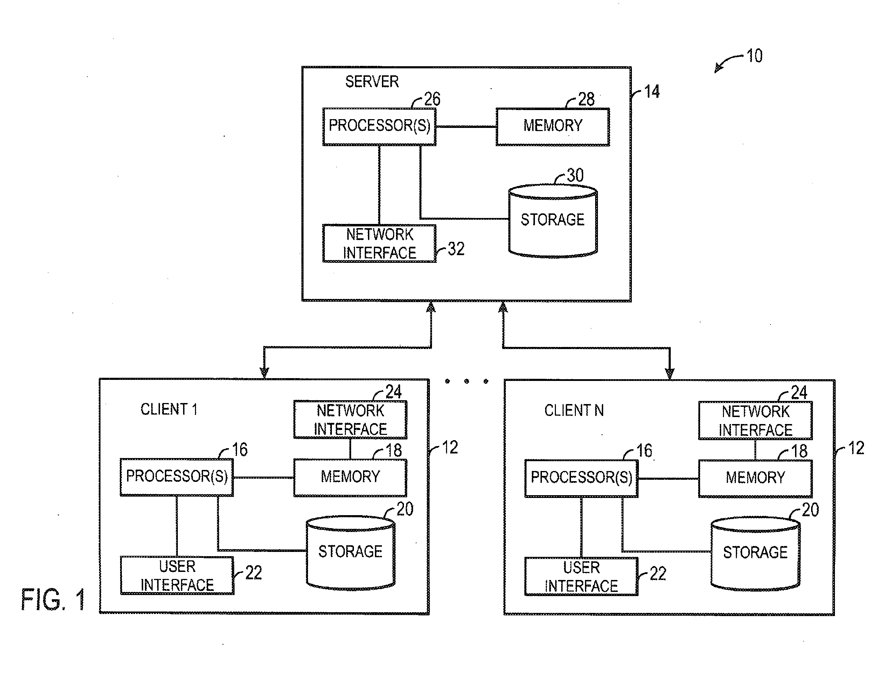

With the foregoing in mind, FIG. 1 represents such a client-server system 10 that includes one or more clients 12 capable of communicating via HTTP with a server 14. As such, the client-server system 10 may include at least one server 14 and any suitable number of clients 12, labeled in FIG. 1 as 1 to N. Each client 12 may include, among other things, one or more processor(s) 16, memory 18, storage 20, a user interface 22, and a network interface 24. The various functional blocks of the client 12 may include hardware elements, software elements, or a combination of both. The blocks of the client 12 illustrated in FIG. 1 are intended to represent only one example of a particular implementation of the client 12 and are intended to illustrate the types of components that may be present in the client 12.

By way of example, the client 12 may be a notebook or desktop computer produced by Hewlett-Packard Company. Additionally or alternatively, the client 12 may be any other suitable electronic device capable of storing files and initiating communication with the server 14 via HTTP. The processor(s) 16 and/or other data processing circuitry may be operably coupled to the memory 18 and the storage 20 to perform various algorithms for carry out the presently closed client-server techniques. These algorithms may be encoded in programs and/or instructions that may be executed by the processor(s) 12 and stored in any suitable article of manufacturer that includes one or more tangible, computer-readable media at least collectively storing the instructions or routines, such as the memory 18 and/or the storage 20.

The storage 20 may store many files, some of which may be duplicated in the nonvolatile storage 20 of other clients 12. Among other things, the storage 20 of the client 12 may contain media files, such as photos, music, and videos. When a user interacts with the client 12 via the user interface 22 (e.g., a display, speakers, and/or a keyboard and mouse), the user may access or modify the files contained in the storage 20. In some embodiments, the client 12 may stream files from the server 14 or may gain access to files located at the server 14.

The server 14 may represent any suitable server capable of carrying out the presently disclosed client-server communication. By way of example, the server 14 may be a home server capable of running Microsoft Windows Home Server (WHS), such as the HP MediaSmart Server by Hewlett-Packard Company. Like the client 12, the server 14 may include one or more processor(s) 26, memory 28, nonvolatile storage 30, and a network interface 32. These components 26-32 may operate in manner similar to corresponding components of the client 12.

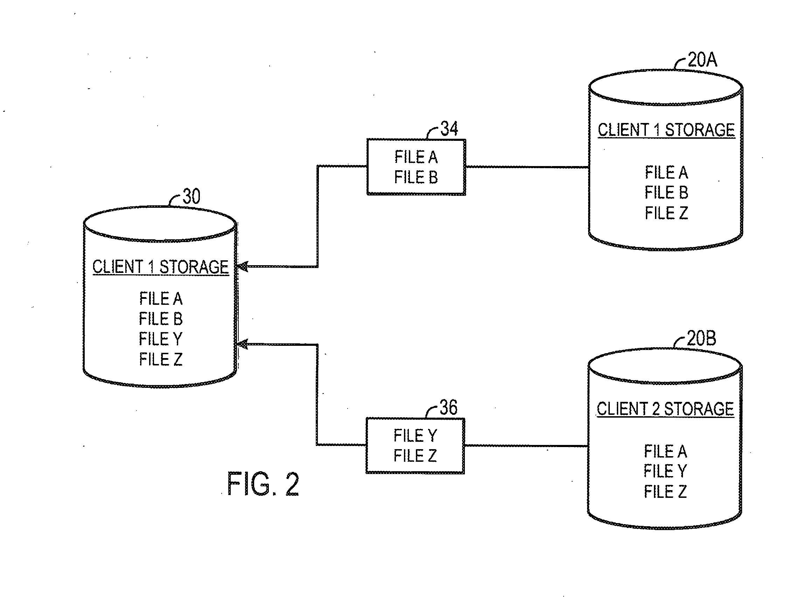

The server 14 may collect certain files from the storages 20 of clients 12 in communication with the server 14. In particular, as shown in FIG. 2, the server storage 30 generally may include at most one copy of a given file, even though that file may simultaneously be stored at more than one client 12. FIG. 2 illustrates two storages 20A and 20B respectively belonging to two different clients 12 in the client-server system 10. As illustrated, the client storage 20A includes three files labeled "A", "B", and "Z". The client storage 20B includes three files labeled "A", "Y", and "Z". Although six instances of the files are stored on the client storages 20A and 20B, only four unique files exist in total. Thus, to obtain one unique copy of each file, the server storage 30 may only need to receive a few of the files from each of the client storages 20A and 20B. As shown, the server storage 30 may obtain a first set of files 34 (files "A" and "B") from the first client storage 20A and a second set of files 36 (files "Y" and "Z") from the second client storage 20B.

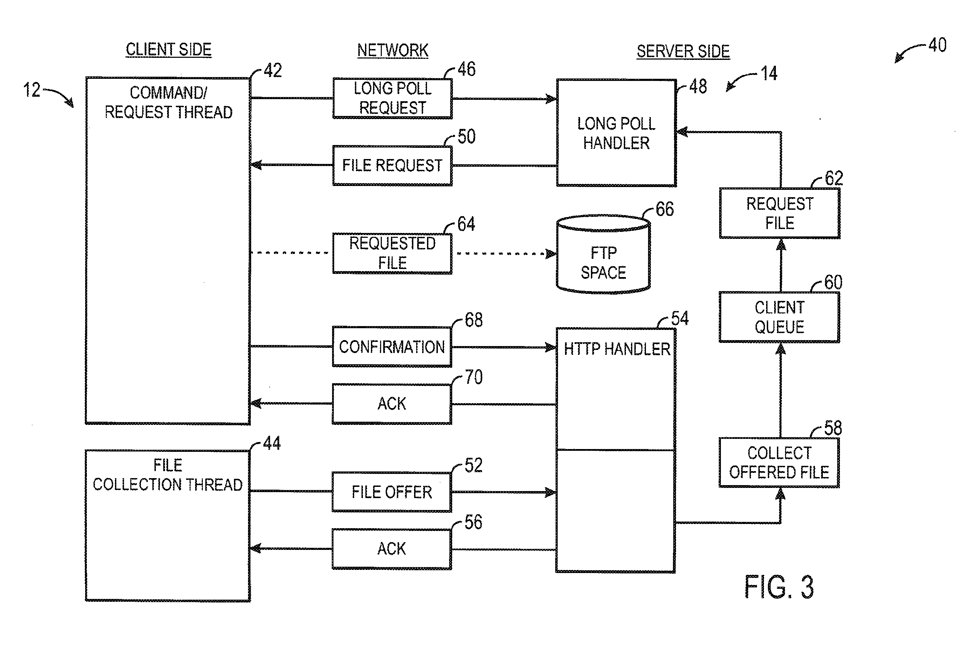

To collect certain files, the client-server system 10 may perform an automatic file collection technique 40, as shown in FIG. 3. The automatic file collection technique 40 may involve communication between the server 14 and any suitable number of clients 12. As illustrated by FIG. 3, each client 12 participating in the client-server system 10 may operate via two parallel threads, namely, a command/request thread 42 and a file collection thread 44.

In general, the command/request thread 42 may issue and maintain a long polling HTTP request 46 to a long poll handler 48 of the server 14. The long polling HTTP request 46 may form a first line of communication with the server 14 that the server 14 may respond to at will. The long polling HTTP request 46 may not terminate for an extended period of time, and may be reissued by the command/request thread 42 when the long polling HTTP request 46 times out without a response. When the server 14 elects to issue a command to the client 12, such as a file request 50 or a configuration reload message, the server 14 may issue the command as a response to the long polling HTTP request 46. Because the server 14 is only responding to HTTP communication initiated by the client 12, no special authentication or intrusive interfaces running on the client 12, such as web servers, are needed to send commands from the server 14 to the client 12. After receiving such a response to the long polling HTTP request 46, the command/request thread 42 may issue and maintain the long polling HTTP request 46 again.

The file collection thread 44 may determine the status of certain files stored on the storage 20 of the client 12. For example, the file collection thread 44 may find all of certain types of files (e.g., all media files) that are stored in the storage 20 on the client 12. Collecting metadata associated with these files, the file collection thread 44 may package such metadata into one or more file offers 52 that describe what files are available for transfer from the client 12 to the server 14. Subsequently, the file collection thread 44 may transmit the one or more of the file offers 52, via HTTP, to a client-specific uniform resource locator (URL) at the server 14.

An HTTP handler 54 on the server 14 may receive the file offer 52 from the client 12 and reply with an acknowledgement packet 56. By receiving the acknowledgement packet 56, the file collection thread 44 may know which file offers 52 have been received by the server 14 and which may have been disrupted due to network or other failure. File offers 52 that have been disrupted may be resent at a later time.

Upon receiving a file offer 52, the server 14 may determine whether the one or more files described in the file offer 52 should be requested from the client 12. For example, if the file offer 52 indicates that the client 12 is storing a file not currently located on the server storage 30, or storing a file that that is located in the server storage 30, but has been modified since last being copied, the server 14 may determine to collect the offered file (block 58). A request for this desired file 58 may be added to a client queue 60 on the server 14, which may include a list of files the server 14 should request from the various clients 12. Based on the client queue 60, and depending on the current network traffic and other considerations, as discussed below, the server 14 may decide to request a specific file (block 62) from the client 12.

The long poll handler 48 may see a specific file request 62 on the client queue 60 and, in response to a long polling HTTP request 46, may reply with a file request 50 command. Such a file request 50 may include certain identifying information that may specifically identify the file requested by the file request 50. The command/request thread 42 of the client 12 may receive the file request 50 command. In response, the command/request thread 42 may transfer a copy of the file 64 via file transfer protocol (FTP) to FTP space 66 on the server 14.

When the file has been fully transferred, the command/request thread 42 may issue a confirmation message 68 over HTTP to a client-specific file confirmation URL at the server 14. This confirmation message 68 may include the identifying information associated with the file request 50 to indicate that that file has been fully transferred. When the confirmation message 68 is received by the HTTP handler 54, the HTTP handler 54 may verify that the requested file 64, now located in the FTP space 66, is still needed. If so, the HTTP handler 54 may cause the file to be transferred from the FTP space 66 into an appropriate location in the server shares of the storage 30. The HTTP handler 54 also may provide an acknowledgement packet 70 to indicate that it has received the confirmation message 68.

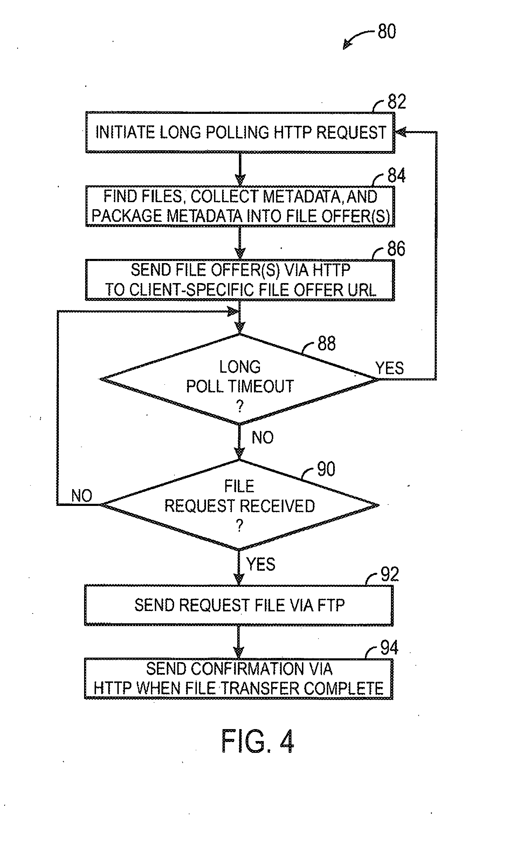

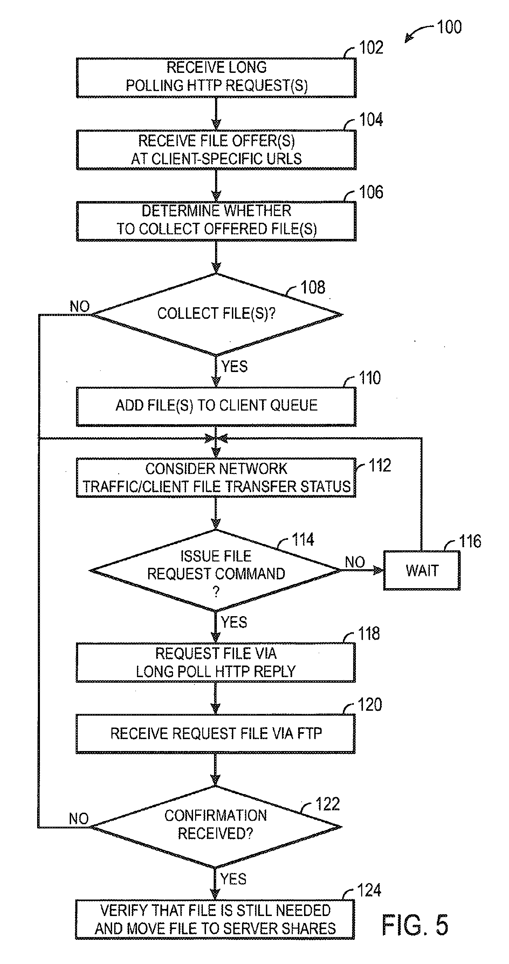

The particular elements of the technique 40 performed by the client 12 and the server 14 are represented by FIGS. 4 and 5, respectively. Turning first to FIG. 4, a flowchart 80 represents an embodiment of a method for carrying out the technique 40 from the perspective of the client 12. The flowchart 80 may begin when the command/request thread 42 issues the long polling HTTP request 46 (block 82). Separately, the file collection thread 44 may find certain files, collect metadata regarding these files, and package such metadata into one or more file offers (block 84). It should be appreciated that the file collection thread 44 may perform such a task regardless of whether the client 12 is currently able to connect to the server 14 (e.g., as may occur if a network connection to the server 14 becomes unavailable). In carrying out block 84, the file collection thread 44 may transmit the one or more file offers 52 via HTTP to a client-specific file offer URL at the server 14.

As noted above, the command/request thread 42 may operate largely independent of the file collection thread 44. In general, the command/request thread 42 may ensure that the long polling HTTP connection remains open to the server 14. To that end, if the long polling HTTP request 46 times out (decision block 88), the command/request thread 42 may issue another long polling HTTP request 46 (block 82). Otherwise, the command/request thread 42 may wait until a command, such as a file request command 50, is received in reply to the long polling HTTP request 46 (decision block 90).

When a file request 50 is received in response to the long polling HTTP request 46, the command/request thread 42 may obtain and transfer the requested file via FTP to the server 14 (block 92). When the file has been transferred, the command/request thread 42 may send a confirmation message 68 via HTTP (block 94).

A flowchart 100 of FIG. 5 represents the actions taken by the server 14 in carrying out the automatic file collection technique 40. The flowchart 100 may begin when the long poll handler 48 of the server 14 receives one or more long polling HTTP requests 46 from corresponding clients 12 (block 102). As should be appreciated, the long poll handler 48 may not necessarily respond to these long polling HTTP requests 46 immediately. As a result, the various long polling HTTP requests 46 may occasionally timeout and be resent. The long poll handler 48 thus may receive new long polling HTTP requests 46 as they are resent, which may occur at other times throughout the flowchart 100. Moreover, if a long polling HTTP connection breaks (e.g., the server 14 fails to receive a long polling HTTP request 46 from a given client 12), the server 14 may save communication (e.g., file requests 50) for a later time when the long polling HTTP connection becomes available once again.

At some point, the HTTP handler 54 on the server 14 may receive one or more file offers 52 at certain client-specific uniform resource locators (URLs) (block 104). For example, to revisit the example of FIG. 2, the server 14 may receive file offers 52 indicating that files "A", "B", and "Z" are available for transfer at a first URL associated with a first client 12. Meanwhile, the server 14 may receive file offers 52 indicating that files "A", "Y", and "Z" are available for transfer at a second URL associated with a second client 12. Based on these file offers 52 and/or what files may already be stored in the storage 30 of the server 14, the server 14 may determine whether to collect such files and from which client 12 to do so from (block 106). In one embodiment, if one of the clients 12 is likely to transfer the files more efficiently or for other reasons, file transfers from that client 12 may be prioritized.

If the server 14 determines to collect a given file indicated by a file offer 52 (decision block 108), a request for the specific file may be added to a client queue 60 (block 110), before considering certain factors relating to the status of the network and/or the clients 12 (block 112). Otherwise, if the server 14 determines not to collect a given file from a file offer 52 (decision block 108), the process may flow directly to block 112 without adding any new file requests to the client queue 60. The various factors considered at block 112 may include, for example, the current amount of traffic over the network, whether a client 12 is currently transferring a file to the server 14, whether the server 14 is currently streaming a file (e.g., a music or video file) to a client 12, and/or whether a client 12 is currently actively performing a task that a file request 50 would interfere with.

Based on the status of the network and/or the status of a client 12, the server 14 may decide to issue a file request command 50 to the client 12 for a file listed for request in the client queue 60. If the server 14 determines not to issue the file request command 50 based on the current network status and/or client 12 status (decision block 114), the server 14 may wait for a certain period of time (block 116) before again reconsidering the factors to decide whether to issue the file request command 50. If the server 14 determines to issue a file request command 50 based on favorable network status and/or client 12 status (decision block 114), the long poll handler 48 may respond to the open long polling HTTP request 46 of the client 12 from which the file is requested (block 118).

The server 14 then may receive the requested file from the client 12 via FTP (block 120). If the server 14 fails to receive a confirmation message 68 (decision block 122), the server 14 may elect to reissue the file request command 50 again at another time. For example, the server 14 may periodically check (e.g., once a day, once every hour, once every half hour, and so forth) whether a confirmation message 68 has been received for a requested file. In some embodiments, the server 14 may check whether a confirmation message 68 has been received after a certain expected amount of data has been received, based on an expected size of a requested file.

When a confirmation message 68 is received by the HTTP handler 54 (decision block 122), the server 14 may verify that the received file is still needed before moving the file from the FTP space 66 to the server shares of the storage 30. For example, in some embodiments, the confirmation message 68 may include metadata associated with the file that has been transferred. The server 14 may use the metadata associated with the recently received file to determine whether the file transferred is up-to-date. That is, if the file had changed since the receipt of the file request 50, as may have been indicated by a new file offer 52, the server 14 may determine that the recently transferred file is not needed. In this way, the server 14 may ensure that the files contained on its storage 30 are up-to-date, particularly in case communication between the client 12 and server 14 is disrupted.

It should be noted that the client-server system 10 may be more secure than other similar systems because, according to the automatic file collection technique 40, the client 12 initiates all communication with the server 14. In particular, the server 14 may send commands on demand in response to the long polling HTTP request 46, which may be continually refreshed by the client 12. As mentioned above, sending commands in response to the long polling HTTP request 46 may eliminate a need for intrusive access to the client 12 by the server 14 and vice versa. For example, the client-server system 10 may not require special authentication or intrusive interfaces running on the client 12, such as web servers, to perform automatic file collection. Also, the client 12 may elect not to receive commands from the server 14 by allowing the long polling HTTP request 46 to timeout without reissuing another long polling HTTP request 46.

Additionally, the client-server system 10 may be more system-focused rather than user-focused. That is, under the automatic file collection technique 40, the server 14, rather than the clients 12, decides whether to transfer a given file to the server storage 30. Because the server 14 may receive file offers 52 from many clients 12, the server 14 may consider both the files that are currently stored in the server storage 30 and the files are available for offer from the individual clients 30. The server 14 thus may gain a system-wide view of files available for transfer, files that have already been transferred, and files that are scheduled to be transferred in the future.

This system-wide view may increase efficiency. For example, the server 14 may leverage its system-wide knowledge to handle file collisions (e.g., when two copies of the same file or similar files are stored locally on different clients 12), which might otherwise lead to multiple copies of the same file being stored on the storage 30 of the server 14. Moreover, the server 14 may throttle file transfers based on the status of the network and the statuses of individual clients 12 to maintain a desired level of performance.

Finally, the automatic file collection technique 40 may not only increase efficiency, but also may prove more robust. Specifically, the client 12 may be aware of communication failures with the server 14 and the server 14 may be aware of communication failures with each client 12. As noted above, if the client 12 sends a file offer 52, but does not receive an HTTP acknowledgment 56, the client 12 may queue the file offer 52 for transmittal at another time. If the client 12 transfers a file via FTP to the server 14 and subsequently sends a confirmation message 68 to the server 14, the client 12 may queue the file for re-transmittal if no HTTP acknowledgment 70 is received in response. Similarly, if the server 14 issues a command, such as a file request 50, but never receives a confirmation message, the server 14 may queue and resend the command again at a later time. In addition, if the server 14 should fail for any reason, the state of its client queue 60 may be saved. Thus, while certain file transfer progress may be lost, file requests 50 may simply be re-transmitted when the client 12 and the server 14 regain communication.

In addition, it should be understood that the automatic file collection technique 40 may be extended for many other forms of client-server communication. For example, in response to the long polling HTTP request 46, the server 14 may provide any suitable command alternatively to or in addition to a file request 52. Such a command may enable the server 14 to initiate, for example, a backup procedure on the client 12 or a configuration status reload procedure. Thus, for example, upon receipt of such a command, the command/request thread 42 may cause another thread, such as the file collection thread 44, to resend all file offers 52. In another example, in response to the command, the command/request thread 42 may cause another thread to initiate a backup procedure. Other commands the server 14 may send in response to the long polling HTTP request 46 may include, for example, an indication of what space has been allocated on the server storage 30.

The specific embodiments described above have been shown by way of example, and it should be understood that these embodiments may be susceptible to various modifications and alternative forms.

## Claims

1. A method comprising:
receiving, in a server (14), a long polling HTTP request from a client (12);
receiving, in the server (14), a file offer from the client (12) via HTTP, wherein the file offer indicates one or more files that are available for transfer from the client (12),
issuing, from the server (14), a file request in response to the long polling HTTP request, wherein the file request requests at least one of the one or more files that are available for transfer; and
receiving, in the server (14), the at least one of the one or more files from the client (12) via FTP.

2. The method of claim 1, wherein the file offer is received at a client-specific uniform resource locator, URL, that identifies the client.

3. The method of claim 1, comprising receiving, in the server, a confirmation message indicating that the at least one of the one or more files has been fully transferred at a client-specific uniform resource locator, URL, that identifies the client.

4. The method of claim 1, comprising determining, using the server, whether a confirmation message indicating that the at least one of the one or more files has been fully transferred has been received in the server from the client and, when the confirmation has been received, storing the at least one of the one or more files in the server.

5. The method of claim 1, comprising determining, using the server, whether a confirmation message indicating that the at least one of the one or more files has been transferred has been received in the server from the client and, when the confirmation has not been received, reissuing the file request from the server.

6. The method of claim 5, wherein determining whether the confirmation message has been received from the client is performed on a periodic basis.

7. The method of claim 5, wherein determining whether the confirmation message has been received from the client is performed after an amount of data has been received from the client, wherein the amount of data is estimated to equal a size of the at least one of the one or more files.

8. The method of claim 1, comprising determining, using the server, whether the one or more files that are available for transfer from the client should be requested and, when the one or more files are determined to be requested, adding the file request for the one or more files to a client queue that lists files for which future file requests are to be issued, wherein the file request is issued based at least in part on the client queue.

9. The method of claim 1, comprising determining, using the server, that network traffic or traffic to the client is beneath a threshold before issuing the file request.

10. The method of claim 1, comprising determining, using the server, that the client is not receiving a streamed file before issuing the file request.

11. A system comprising:
a client (12) configured to initiate a long polling HTTP request, to communicate information regarding the client (12) to a client-specific uniform resource locator via HTTP, and to receive a client-specific command in response to the long polling HTTP request; and
a server (14) configured to receive the long polling HTTP request, to receive the information regarding the client (12) at a client-specific uniform resource locator via HTTP, to generate the client-specific command based at least in part on the information regarding the client (12), and to communicate the client-specific command as a response to the long polling HTTP request.

12. The system of claim 11, wherein the information regarding the client comprises a file offer indicating one or more files available for transfer from the client and wherein the command comprises a file request that requests at least one of the one or more files.

13. The system of claim 11, comprising another client configured to initiate another long polling HTTP request, to communicate information regarding the other client to another client-specific uniform resource locator via HTTP, and to receive another client-specific command in response to the other long polling HTTP request;
wherein the server is configured to receive the other long polling HTTP request, to receive the information regarding the other client at the other client-specific uniform resource locator via HTTP, to generate the other client-specific command based at least in part on the information regarding the client, and to communicate the other client-specific command as a response to the long polling HTTP request.

14. A method comprising:
initiating a long polling HTTP request from a client (12) to a server (14);
transmitting a file offer via HTTP from the client (12) to the server (14), wherein the file offer indicates one or more files that are available for transfer from the client (12) to the server (14);
receiving, in the client (12), a file request from the server (14) in response to the long polling HTTP request, wherein the file request requests at least one of the one or more files that are available for transfer; and
transferring the at least one of the one or more files from the client (12) to the server (14) via FTP.

15. The method of claim 14, comprising determining, using the client, the file offer by collecting and packaging metadata associated with the one or more files that are available for transfer.

## Patentansprüche

1. Verfahren, das Folgendes umfasst:
Empfangen einer Long-Polling-HTTP-Anfrage an einem Server (14) von einem Client (12);
Empfangen eines Dateiangebots am Server (14) vom Client (12) über HTTP, wobei das Dateiangebot eine oder mehrere Dateien anzeigt, die für eine Übertragung vom Client (12) zur Verfügung stehen;
Ausgeben einer Dateianfrage vom Server (14) als Antwort auf die Long-Polling-HTTP-Anfrage, wobei die Dateianfrage zumindest eine der einen oder mehreren Dateien anfragt, die für eine Übertragung zur Verfügung stehen; und
Empfangen der zumindest einen der einen oder mehreren Dateien am Server (14) vom Client (12) über FTP.

2. Verfahren nach Anspruch 1, wobei das Dateiangebot an einem clientspezifischen Uniform Resource Locator, URL, empfangen wird, der den Client identifiziert.

3. Verfahren nach Anspruch 1, das das Empfangen einer Bestätigungsnachricht, die anzeigt, dass die zumindest eine der einen oder mehreren Dateien an einem clientspezifischen Uniform Resource Locator, URL, der den Client identifiziert, vollständig übertragen wurde, am Server umfasst.

4. Verfahren nach Anspruch 1, das unter Verwendung des Servers das Ermitteln, ob eine Bestätigungsnachricht, die anzeigt, dass die zumindest eine der einen oder mehreren Dateien vollständig übertragen wurde, vom Client am Server empfangen wurde, und bei Empfang der Bestätigung das Speichern der zumindest einen der einen oder mehreren Dateien am Server umfasst.

5. Verfahren nach Anspruch 1, das unter Verwendung des Servers das Ermitteln, ob eine Bestätigungsnachricht, die anzeigt, dass die zumindest eine der einen oder mehreren Dateien vollständig übertragen wurde, vom Client am Server empfangen wurde, und bei Nicht-Empfang der Bestätigung das erneute Ausgeben der Dateianfrage vom Server umfasst.

6. Verfahren nach Anspruch 5, wobei das Ermitteln, ob die Bestätigungsnachricht vom Client empfangen wurde, periodisch durchgeführt wird.

7. Verfahren nach Anspruch 5, wobei das Ermitteln, ob die Bestätigungsnachricht vom Client empfangen wurde, durchgeführt wird, nachdem eine Datenmenge vom Client empfangen wurde, wobei die Datenmenge schätzungsweise eine Größe gleich zumindest einer der einen oder mehreren Dateien aufweist.

8. Verfahren nach Anspruch 1, das unter Verwendung des Servers das Ermitteln, ob die eine oder mehreren Dateien, die für eine Übertragung vom Client zur Verfügung stehen, angefragt werden sollten, und wenn ermittelt wird, dass die eine oder mehreren Dateien anzufragen sind, das Hinzufügen der Dateianfrage für die eine oder mehreren Dateien zu einer Clientwarteschlange umfasst, in der Dateien angeführt sind, für die künftige Dateianfragen auszugeben sind, wobei die Datenanfrage zumindest teilweise basierend auf der Clientwarteschlange ausgegeben wird.

9. Verfahren nach Anspruch 1, das das Ermitteln, dass Netzwerkdatenverkehr oder Datenverkehr an den Client unterhalb eines Schwellenwerts liegt, bevor die Dateianfrage ausgegeben wird, unter Verwendung des Servers umfasst.

10. Verfahren nach Anspruch 1, das das Ermitteln, dass der Client eine gestreamte Datei nicht empfängt, bevor die Dateianfrage ausgegeben wird, unter Verwendung des Servers umfasst.

11. System, das Folgendes umfasst:
einen Client (12), der so konfiguriert ist, dass er eine Long-Polling-HTTP-Anfrage einleitet, dass er Informationen in Bezug auf den Client (12) über HTTP an einen clientspezifischen Uniform Resource Locator überträgt, und dass er einen clientspezifischen Befehl als Antwort auf die Long-Polling-HTTP-Anfrage empfängt; und
einen Server (14), der so konfiguriert ist, dass er die Long-Polling-HTTP-Anfrage empfängt, dass er die Informationen in Bezug auf den Client (12) über HTTP an einem clientspezifischen Uniform Resource Locator empfängt, dass er den clientspezifischen Befehl zumindest teilweise basierend auf den Informationen in Bezug auf den Client (12) erzeugt, und dass er den clientspezifischen Befehl als Antwort auf die Long-Polling-HTTP-Anfrage überträgt.

12. System nach Anspruch 11, wobei die Informationen in Bezug auf den Client ein Dateiangebot umfassen, das eine oder mehrere Dateien anzeigt, die für eine Übertragung vom Client zur Verfügung stehen, und wobei der Befehl eine Dateianfrage umfasst, die zumindest eine der einen oder mehreren Dateien anfragt.

13. System nach Anspruch 11, das einen weiteren Client umfasst, der so konfiguriert ist, dass er eine weitere Long-Polling-HTTP-Anfrage einleitet, dass er Informationen in Bezug auf den weiteren Client über HTTP an einen weiteren clientspezifischen Uniform Resource Locator überträgt, und dass er einen weiteren clientspezifischen Befehl als Antwort auf die weitere Long-Polling-HTTP-Anfrage empfängt;
wobei der Server so konfiguriert ist, dass er die andere Long-Polling-HTTP-Anfrage empfängt, dass er die Informationen in Bezug auf den anderen Client über HTTP an dem anderen clientspezifischen Uniform Resource Locator empfängt, dass er den clientspezifischen Befehl zumindest teilweise basierend auf den Informationen in Bezug auf den Client erzeugt, und dass er den clientspezifischen Befehl als Antwort auf die Long-Polling-HTTP-Anfrage überträgt.

14. Verfahren, das Folgendes umfasst:
Einleiten einer Long-Polling-HTTP-Anfrage von einem Client (12) an einen Server (14);
Übertragen eines Dateiangebots über HTTP vom Client (12) an den Server (14); wobei das Dateiangebot eine oder mehrere Dateien anzeigt, die für eine Übertragung vom Client (12) an den Server (14) zur Verfügung stehen;
Empfangen einer Dateianfrage vom Server (14) am Client (12) als Antwort auf die Long-Polling-HTTP-Anfrage, wobei die Dateianfrage zumindest eine der einen oder mehreren Dateien anfragt, die für eine Übertragung zur Verfügung stehen; und
Übertragen der zumindest einen der einen oder mehreren Dateien vom Client (12) an den Server (14) über FTP.

15. Verfahren nach Anspruch 14, das das Ermitteln des Dateiangebots unter Verwendung des Clients durch Sammeln und Verpacken von Metadaten umfasst, die der einen oder den mehreren Dateien zugehörig sind, die für eine Übertragung zur Verfügung stehen.

## Revendications

1. Procédé comprenant les étapes suivantes :
recevoir, dans un serveur (14), une demande HTTP d'interrogation prolongée provenant d'un client (12) ;
recevoir, dans le serveur (14), une offre de fichiers provenant du client (12) par l'intermédiaire du protocole HTTP, dans lequel l'offre de fichiers indique un ou plusieurs fichiers qui sont disponibles en vue d'un transfert depuis le client (12),
envoyer, à partir du serveur (14), une demande de fichiers en réponse à la demande HTTP d'interrogation prolongée, dans lequel la demande de fichiers demande au moins un parmi le ou les fichiers qui sont disponibles en vue d'un transfert ; et
recevoir, dans le serveur (14), ledit fichier parmi le ou les fichiers provenant du client (12) par l'intermédiaire du protocole FTP.

2. Procédé selon la revendication 1, dans lequel l'offre de fichiers est reçue au niveau d'un localisateur de ressources uniforme, URL, spécifique au client qui identifie le client.

3. Procédé selon la revendication 1, comprenant la réception, dans le serveur, d'un message de confirmation indiquant que ledit fichier parmi le ou les fichiers a été entièrement transféré au niveau d'un localisateur de ressources uniforme, URL, spécifique au client qui identifie le client.

4. Procédé selon la revendication 1, consistant à déterminer, en utilisant le serveur, si un message de confirmation provenant du client, indiquant que ledit fichier parmi le ou les fichiers a été entièrement transféré, a été reçu dans le serveur et, lorsque la confirmation a été reçue, à stocker ledit fichier parmi le ou les fichiers dans le serveur.

5. Procédé selon la revendication 1, consistant à déterminer, en utilisant le serveur, si un message de confirmation provenant du client, indiquant que ledit fichier parmi le ou les fichiers a été transféré, a été reçu dans le serveur et, lorsque la confirmation n'a pas été reçue, à renvoyer la demande de fichiers à partir du serveur.

6. Procédé selon la revendication 5, dans lequel la détermination du fait que le message de confirmation provenant du client a été reçu est effectuée de manière périodique.

7. Procédé selon la revendication 5, dans lequel la détermination du fait que le message de confirmation provenant du client a été reçu est effectuée après qu'une quantité de données provenant du client a été reçue, dans lequel la quantité de données est estimée égale à une taille de ledit fichier parmi le ou les fichiers.

8. Procédé selon la revendication 1, consistant à déterminer, en utilisant le serveur, si le ou les fichiers qui sont disponibles en vue d'un transfert depuis le client doit/doivent être demandé(s) et, lorsque la demande du ou des fichiers est déterminée, à ajouter la demande de fichiers pour le ou les fichiers à une file d'attente de clients qui énumère les fichiers pour lesquels des futures demandes de fichiers seront envoyées, dans lequel la demande de fichiers est envoyée en fonction, au moins en partie, de la file d'attente de clients.

9. Procédé selon la revendication 1, consistant à déterminer, en utilisant le serveur, que le trafic du réseau ou le trafic vers le client est en-dessous d'un seuil avant d'envoyer la demande de fichiers.

10. Procédé selon la revendication 1, consistant à déterminer, en utilisant le serveur, que le client ne reçoit pas un fichier de transmission en continu avant d'envoyer la demande de fichiers.

11. Système comprenant :
un client (12) configuré pour initier une demande HTTP d'interrogation prolongée, pour communiquer des informations concernant le client (12) à un localisateur de ressources uniforme, URL, spécifique au client par l'intermédiaire du protocole HTTP, et pour recevoir une commande spécifique au client en réponse à la demande HTTP d'interrogation prolongée ; et
un serveur (14) configuré pour recevoir la demande HTTP d'interrogation prolongée, pour recevoir les informations concernant le client (12) au niveau d'un localisateur de ressources uniforme spécifique au client par l'intermédiaire du protocole HTTP, pour générer la commande spécifique au client en fonction, au moins en partie, des informations concernant le client (12) et pour communiquer la commande spécifique au client en tant que réponse à la demande HTTP d'interrogation prolongée.

12. Système selon la revendication 11, dans lequel les informations concernant le client comprennent une offre de fichiers indiquant un ou plusieurs fichiers disponibles en vue d'un transfert depuis le client et dans lequel la commande comprend une demande de fichiers qui demande au moins un parmi le ou les fichiers.

13. Système selon la revendication 11, comprenant un autre client configuré pour initier une autre demande HTTP d'interrogation prolongée, pour communiquer des informations concernant l'autre client à un autre localisateur de ressources uniforme spécifique au client par l'intermédiaire du protocole HTTP, et pour recevoir une autre commande spécifique au client en réponse à l'autre demande HTTP d'interrogation prolongée ;
dans lequel le serveur est configuré pour recevoir l'autre demande HTTP d'interrogation prolongée, pour recevoir les informations concernant l'autre client au niveau de l'autre localisateur de ressources uniforme spécifique au client par l'intermédiaire du protocole HTTP, pour générer l'autre commande spécifique au client en fonction, au moins en partie, des informations concernant le client et pour communiquer l'autre commande spécifique au client en tant que réponse à la demande HTTP d'interrogation prolongée.

14. Procédé comprenant les étapes suivantes :
initier une demande HTTP d'interrogation prolongée provenant d'un client (12) vers un serveur (14);
transmettre une offre de fichiers par l'intermédiaire du protocole HTTP depuis le client (12) vers le serveur (14), dans lequel l'offre de fichiers indique un ou plusieurs fichiers qui sont disponibles en vue d'un transfert depuis le client (12) vers le serveur (14),
recevoir, dans le client (12), une demande de fichiers depuis le serveur (14) en réponse à la demande HTTP d'interrogation prolongée, dans lequel la demande de fichiers demande au moins un parmi le ou les fichiers qui sont disponibles en vue d'un transfert ; et
transférer ledit fichier parmi le ou les fichiers depuis le client (12) vers le serveur (14) par l'intermédiaire du protocole FTP.

15. Procédé selon la revendication 14, consistant à déterminer, en utilisant le client, l'offre de fichiers en collectant et en encapsulant des métadonnées associées au(x) fichier(s) qui sont disponibles en vue d'un transfert.
